Europäisches Patentamt

European Patent Office

Office européen des brevets

(19)

(11) Veröffentlichungsnummer: **0 316 310**
**B1**

(12) # EUROPÄISCHE PATENTSCHRIFT

(45) Veröffentlichungstag der Patentschrift: **16.01.91**

(51) Int. Cl.⁵: **B 60 R 9/04**

(21) Anmeldenummer: **87901445.4**

(22) Anmeldetag: **16.02.87**

(86) Internationale Anmeldenummer:
**PCT/EP87/00086**

(87) Internationale Veröffentlichungsnummer:
**WO 87/04982 27.08.87 Gazette 87/19**

(54) **HALTERUNG FÜR DACHGEPÄCKTRÄGER.**

(30) Priorität: **14.02.86 DE 8604007 u**
**14.06.86 DE 8616131 u**

(43) Veröffentlichungstag der Anmeldung:
**24.05.89 Patentblatt 89/21**

(45) Bekanntmachung des Hinweises auf die
Patenterteilung:
**16.01.91 Patentblatt 91/03**

(84) Benannte Vertragsstaaten:
**AT BE CH DE FR GB IT LI LU NL SE**

(56) Entgegenhaltungen:
**DE-A-3 313 267**
**DE-A-3 406 149**
**DE-C-3 050 024**
**FR-A-1 435 201**
**FR-A-2 556 667**

(73) Patentinhaber: **Möbius, Ulrich**
**Fraunhoferstrasse 45**
**D-6450 Hanau (DE)**

(72) Erfinder: **Möbius, Ulrich**
**Fraunhoferstrasse 45**
**D-6450 Hanau (DE)**

(74) Vertreter: **Stoffregen, Hans-Herbert, Dr. Dipl.-Phys. et al**
**Patentanwalt, Salzstrasse 11 a, Postfach 21 44**
**D-6450 Hanau (Main) 1 (DE)**

Courier Press, Leamington Spa, England.

## Beschreibung

Die Erfindung bezieht sich auf eine Halterung für eine auf ein Kraftfahrzeugdach anzuordnende Trägeranordnung gemäß dem Oberbegriff des Anspruchs 1. Ein solche Halterung ist aus dem Dokument DE—A—3 313 267 bekannt.

Übliche Trägeranordnungen wie z.B. Gepäckträger umfassen Tragbügel, die über seitliche Halterungen an den Regenrinnen eines Kraftfahrzeugdaches festgelegt werden. Eine solche Konstruktion wirkt jedoch wie ein Fremdelement auf ein Kraftfahrzeugdach. Zudem sind Bügelanordnungen aerodynamisch überaus nachteilig, so daß andere Lösungen bevorzugt werden. Hierzu gehört die der Europäischen Patentanmeldung 0065218 zu entnehmende Trägeranordnung, die ein unmittelbar auf dem Kraftfahrzeugdach aufliegendes Basiselement umfaßt, von dem aus auf die stabilen Zonen des Kraftfahrzeugdaches Kräfte übertragen werden. Durch das Basiselement und dessen unmittelbares Aufliegen auf dem Kraftfahrzeugdach bedingt stellt eine entsprechende Trägeranordnung eine Fortsetzung der Karosserie dar, geht also in diese über, so daß behauptet werden kann, daß sie optisch nicht bewußt erfaßt wird. Zudem ist eine entsprechende Trägeranordnung aerodynamisch überaus günstig, so daß der Fahrtwiderstand eines Kraftfahrzeuges nur unwesentlich beeinflußt wird. Eine der Europäischen Patentanmeldung 0065218 zu entnehmende Trägeranordnung zeigt ferner den Vorteil, daß auch ein Einsatz für dachübergreifende Türen möglich ist, d.h. für Autotypen, bei denen der Oberrand der Tür den freien Rand des Kraftfahrzeugdachs überlappt, wobei in dem Zwischenraum ein Dichtstreifen angeordnet ist. Dieser dient dazu, das veränderbare Türspaltmaß bei Belastung des Kraftfahrzeuges auszugleichen, ohne daß Wasser in das Kraftfahrzeuginnere eindringen kann oder daß Geräusche entstehen. Hierzu weist die erwähnte Trägeranordnung eine Halterung auf, die klauenförmig den Rand des Kraftfahrzeugdaches umfaßt. Hierbei ist jedoch zwischen der Halterung und dem Kraftfahrzeugdach das Gummielement vorgesehen, wodurch dieses zerstört werden kann. In Folge davon kann Wasser in das Kraftfahrzeuginnere eindringen. Fener erfolgt durch die Zerstörung der Dichtleiste eine Geräuschbildung. Bei anderen Konstruktionen wird die Halterung im Bereich des abragenden Steges mit dem Kraftfahrzeugdach vernietet. Erkennbar erfolgt hierdurch eine Beschädigung, durch die die zuvor erwähnten Nachteile entstehen. Aus dem Dokument FR—A—1 435 201 ist schon eine aus einem inneren und einem äußeren Abschnitt gebildete Halterung bekannt.

Unabhängig davon, ob eine Trägeranordnung Tragbügel oder die aerodynamisch günstig ausgebildeten auf dem Kraftfahrzeugdach aufliegenden Basiselemente umfasst, weisen die bekannten Konstruktionen häufig erhebliche Nachteile hinsichtlich einer sicheren Befestigung auf, die sich insbesondere dann bewähren muß, wenn z.B. bei einem Aufprall erhebliche Beschleunigungen auftreten. Dies ist insbesondere bei Bügelträgern (Auftreten von Hebelkräften) ein konstruktives Problem.

Aufgabe der vorliegenden Erfindung ist es zum einen, eine Halterung der eingangs genannten Art so auszubilden, daß bei einfacher Konstruktion eine sichere Befestigung auf einem Kraftfahrzeugdach möglich ist, so daß auch bei extremen Belastungen eine Unverrückbarkeit gegeben ist, so daß die auf dem Kraftfahrzeugdach aufgebrachten Traglasten mit der Trägeranordnung zusammen auf dem Dach verbleiben. Aufgabe ist es auch, die Halterung so auszubilden, daß eine Befestigung von Trägern an Kraftfahrzeugen ohne Regenrinne möglich ist, d.h. für Konstruktionen mit z.B. dachübergreifenden Türen. Dabei soll sichergestellt sein, daß durch die Befestigung der Halterung an dem Kraftfahrzeug eine Beschädigung der Dichtleiste unterbleibt, und daß ein Eindringen von Wasser in das Kraftfahrzeuginnere oder eine unerwünschte Geräuschbildung nicht erfolgt.

Die Aufgabe wird erfindungsgemäß durch die Merkmale des gekennzeichnenden Teils des Anspruchs 1 gelöst. Vorzugsweise ist vorgesehen, daß die Halterung zwischen der Dichtleiste und dem Dachrand bzw. dem Stegt verläuft und kraftschlüssig oberhalb des Stegs im Bereich des Verschlußelements mit dem Kraftfahrzeugdach wechselwirkt, und zwar dort, wo stabile Zonen ausgebildet sind und sich konstruktiv für die Befestigung eigenen. In Ausgestaltung weist dabei die Halterung im Berührungsbereich mit dem Kraftfahrzeugdach einen Antirutschbereich wie Haftfläche auf, wodurch der Kraftschluß erhöht wird. Dabei kann die Haftfläche durch Aufrauhen des entsprechenden Bereichs der Halterung oder durch eine besondere Beschichtung hervorgerufen werden.

Erfindungsgemäß erfolgt unmittelbar über die seitlich des Tragelementes verlaufenden Halterungen eine Krafteinleitung auf die stabilen Zonen des Daches, wobei gegebenenfalls eine scheinbare Verlängerung des Tragelementes dadurch erfolgen kann, daß die Traglasten über die Halterungen auf die stabilen Außenzonen des Dachs abgetragen werden. Hierzu besteht die Möglichkeit, daß das Tragelement beim Festspannen eine Kraft auf die Halterung in Richtung auf das Kraftfahrzeug hervorruft. Dies wird vorzugsweise dadurch ermöglicht, daß die Halterungen unter den Abstützungen hindurchgeführt und im Abstand gelenkig mit einem Spannelement verbunden ist. der Verbindungspunkt dient gleichzeitig als Schwenkachse für die Halterung. Selbstverständlich kann die Halterung auch durch eine Seitenwand des Tragelementes abgestützt hindurchgeführt werden. Beim Anziehen des Spannelementes muß nur sichergestellt sein, daß das Tragelement auf die Halterung in Richtung auf das Kraftfahrzeugdach eine Kraft hervorruft.

Sofern die Halterung zwischen der Dichtleiste und dem Kraftfahrzeugdach verläuft, ist sichergestellt, daß eine Zerstörung jener unterbleibt. Dies bewirkt wiederum, daß ein Eindringen von Wasser in das Kraftfahrzeuginnere nicht möglich ist. Dadurch, daß die Dichtleiste auch nach Anordnen der Halterung unbeschädigt bleibt, ist ferner gewährleistet, daß eine bei üblichen Halterungen ansonsten auftretende Geräuschbildung nicht auftritt.

Erfindungsgemäß nutzt man demzufolge den konstruktiv erforderlichen Abstand zwischen Kraftfahrzeugdach und übergreifendem Verschlußelement wie Tür aus, d.h. das erforderliche Türspaltmaß, durch das Verwindungen zwischen Kraftfahrzeugdach und Tür während des Fahrens ausgeglichen werden.

Um eine erfindungsgemäße Halterung zu befestigen, muß demzufolge die Dichtleiste von dem Kraftfahrzeugdach z.B. abgehoben werden. Nach Befestigen der Halterung liegt die Dichtleiste auf der außenliegenden Fläche der Halterung an, ohne daß hierdurch eine merkliche Beeinflußung deren Funktion erfolgt. Selbstverständlich kann die erfindungsgemäße Lehre auch dadurch realisiert werden, daß die Halterung durch einen in der Dichtleiste vorhandenen Schlitz, Öffnung oder ähnliches geführt wird.

Nach einer weiteren hervorzuhebenden Ausgestaltung der Erfindung erfolgt im Bereich der stabilen Randzone des Kraftfahrzeugdaches eine Kraftumlenkung, wobei eine horizontale Komponente durch ein entlang des Kraftfahrzeugdaches verlaufendes Spannelement wie z.B. Seil oder Stange erzeugt ist. Dabei ist mit einer konstruktiven Kraftbegrenzung in horizontaler Richtung sichergestellt, daß das Kraftfahrzeugdach nicht unzulässig verformt wird.

Durch die Kraftumlenkung ist sichergestellt, daß eine stabile Befestigung des Tragelementes auf dem Kraftfahrzeugdach vorliegt, unabhängig davon, ob es sich um eine herkömmliche Konstruktion mit Tragbügeln oder die zuvor ausführlich geschilderte vorteilhafte karosserieanpassungsfähige Trägeranordnung mit Basiselement handelt.

Nach einer weiteren Ausführungsform der Erfindung mit einer Dachrandleiste, die im Abstand zum seitlichen freien Rand eine in Längsrichtung des Kraftfahrzeuges verlaufenden Abschnitt wie Einbuchtung aufweist, wird vorgeschlagen, daß die Halterung um einen in Abstand zu der Kraftfahrzeugdachoberfläche verlaufende Achse drehbar und durch diese in einen inneren und äußeren Abschnitt unterteilt ist, wobei der äußere Abschnitt den Rand des Kraftfahrzeugdaches zumindest teilweise umgreift und auf dem Abschnitt bzw. in der Einbuchtung abgestützt ist und der innere Abschnitt mit einem entlang des Kraftfahrzeugdaches verlaufenden Spannelemntes verbunden ist oder ein Abschnitt von diesem ist.

Durch diese Konstruktion wird ein Abschnitt der Halterung als Hebel ausgebildet, der sich zwischen dem freien Rand des Kraftfahrzeugdaches oder einem in diesem Bereich verlaufenden Rinnenelement und der Ausbuchtung erstreckt und in diese durch Verschwenken der Halterung um die im Abstand zur Kraftfahrzeugoberfläche verlaufende Achse gedrückt wird. Dabei kann die Achse bei einer Trägeranordnung gemäß der Europäischen Patentanmeldung 0065218 im Inneren des Basiselementes verlaufen, wodurch eine zusätzliche Sicherung, insbesondere gegen unkontrolliertes Entfernen des Tragelementes, aber auch gegen ein unerwünschtes Verschmutzen gegeben ist.

Sofern die Halterung unter der Abstützung verläuft oder durch die Seitenwandung abgestützt geführt ist und kraftschlüssig im Bereich des jeweiligen Abschnittes mit dem Kraftfahrzeug wechselwirkt, sind die diesbezüglichen Abschnitte der Halterung eigensteif ausgebildet, wobei die freien einander zugewandten Enden der Abschnitte vom Kraftfahrzeugdach weg abgewinkelt sind und mittelbar oder unmittelbar in ein Spannelement übergehen, das in dem Tragelement geführt sowie befestigbar und spannbar ist.

Durch die erfindungsgemäße Konstruktion werden die außenliegenden Abschnitte der Halterung kraftschlüssig an dem Kraftfahrzeugdach, und zwar auf den stabilen Zonen und gegebenenfalls an dessen Seitenbereichen, also im Bereich von Öffnungen wie z.B. Türen angelegt. Sodann verläuft die Halterung unterhalb und/oder seitlich der Abstützungen, um anschließend in ein Spannelement überzugehen, das selbst von der Trägeranordnung ausgeht. Wird nun das Spannelement gekürzt, so zeigt das Tragelement ein Bestreben, sich in Richtung des Kraftfahrzeugdaches zu bewegen, so daß hierdurch ein festes Anliegen auf diesem erfolgt. Zusätzlich wird der unterhalb der Abstützung verlaufende Abschnitt in Richtung des Kraftfahrzeugdaches gepreßt, so daß hierdurch weiterhin der Kraftschluß zwischen den außenliegenden Abschnitten der Halterung und dem Kraftfahrzeugdach erhöht wird. Die Abstützung wirkt dabei als Gegenlager. Durch die Konstruktion und die zusammenwirkenden Elemente wie Spannelement, eigenstabile Halterung und Tragelement bzw. dessen Abstützung erfolgt nicht nur eine Eigensicherung der Befestigung, sondern auch eine automatische Anpassung an die jeweilige Dachgeometrie. Es ist ferner der Vorteil gegeben, daß eine optimale Krafteinführung in die stabilen Randzonen des Kraftfahrzeugdaches gegeben ist.

In hervorzuhebender Ausgestaltung der Erfindung erfolgt dabei von einer durch das Spannelement vorgegebenen horizontalen Kraftkomponente eine Umlenkung in eine etwa diagonal verlaufende, so daß unabhängig von der Belastung des Tragelementes stets ein sicheres Anliegen der Abschnitte der Halterung auf dem Kraftfahrzeugdach gewährleistet ist, insbesondere daß ein wirksamer Kraftschluss im Bereich des vertikal verlaufenden Bereichs der Dachkonstruktion gegeben ist, in der sich der Halterung anpreßt. Es tritt quasi zwischen den Halterungen zu beiden Seiten des Kraftfahrzeugdaches ein konstruktiv kontrollierter Schraubstockeffekt auf. Hierdurch bedingt ist eine sichere Befestigung gegeben, die auch starken Belastungen standhält.

Um eine einfache Umlenkung der Kraft zu ermöglichen, ist das Spannelement im Verbundungsbereich mit den Halterungen flexibel ausgebildet und wird im Abstand zu den freien Enden der Abschnitte abgestützt, so daß eine Drehung um quasi alle Achsen möglich ist. Dabei sind die entsprechenden Bereiche des Spannelementes vorzugsweise als Seil ausgebildet, die durch ein Spannschloß verbunden ist, das im wesentlichen durch z.B. eine Gegengewindehülse gebildet wird, in dem Außengewinde aufweisende Bolzen verschiebbar angeordnet sind, die in die Seilabschnitte übergehen. Vorzugsweise werden jedoch die Abschnitte über ein Gurtband oder ein gleichwirkendes Element verbunden, das durch Wechselwirken mit einem Stellelement scheinbar verkürzt bzw. verlängert wird. Hierzu greift das Stellelement in eine Schleife des Bandes ein, dessen Lage die Größe und damit wirksame Länge des Bandes bestimmt.

Eine Ausgestaltung der erfindungsgemäßen Halterung zeichnet sich folglich im wesentlich dadurch aus, daß zum einen ein kraftschlüssiges Wechselwirken mit dem Kraftfahrzeugdach im Bereich der Seitenholmen erfolgt, die Halterung selbst unterhalb der Tragelementenabschnitten oder in diesem abgestützt verläuft, die auf dem Kraftfahrzeugdach aufliegen, und daß anschließend eine Umlenkung derart erfolgt, daß eine Kraftumlenkung von einer parallel zur Kraftfahrzeugoberfläche verlaufenden Richtung in eine Diagonale erfolgt.

Weitere Einzelheiten, Vorteile und Merkmale der Erfindung ergeben sich nicht nur aus den Ansprüchen, den diesen zu entnehmenden Merkmalen—für sich und/oder in Kombination—, sondern auch aus der nachfolgenden Beschreibung von in der Zeichnung dargestellten bevorzugten Ausführungsbeispielen.

Es zeigen:

Fig. 1 eine Prinzipdarstellung einer erfindungsgemäßen Halterung an eimem auf einem Kraftfahrzeugdach aufliegenden Tragelement,

Fig. 2 die Halterung nach Fig. 1 an einem einen Bügel umfassenden Tragelementes,

Fig. 3 eine zweite Ausführungsform einer Halterung,

Fig. 4 einen Ausschnitt eines Tragelementes in Form eines Tragbügels mit Halterung,

Fig. 5 einen Ausschnitt eines auf dem Kraftfahrzeugdach angeordneten Basiselementes einer besonders hervorzuhebenden Trägeranordnung mit Halterung und

Fig. 6 eine besonders hervorzuhebende Ausführungsform einer Spannanordnung.

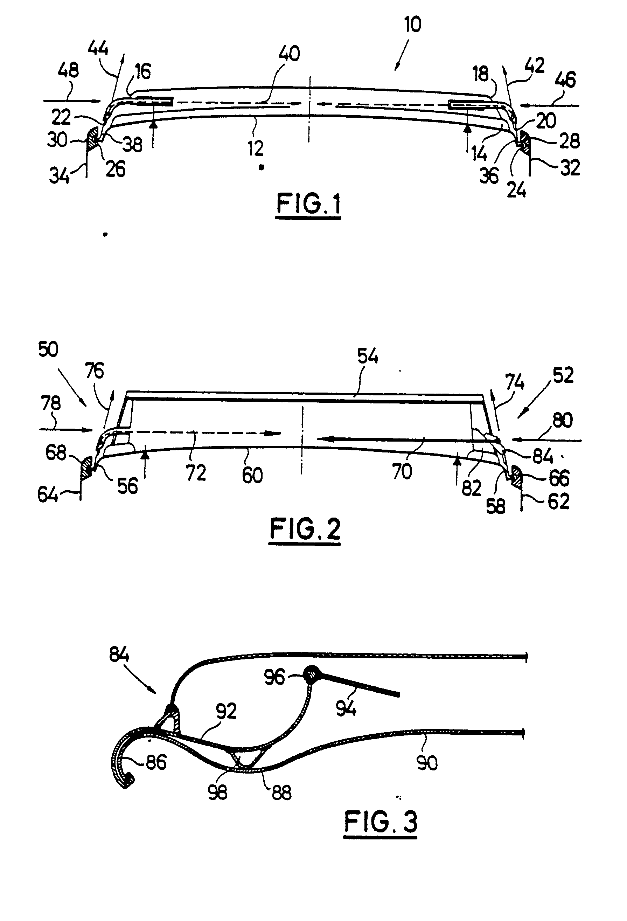

In Fig. 1 ist ein Tragelement (10) dargestellt, das einen Teil einer Trägeranordnung gemäß der Europäischen Patentanmeldung 0065218 sein kann und sich demzufolge quer zur Längsrichtung eines Kraftfahrzeugdaches erstreckt und auf einem Kraftfahrzeugdach (12) über ein zumindest im seiten und vorderen Randbereich verlaufendes Gummielement (14) aufliegt. Um ein solches Tragelement (10) auch für Kraftfahrzeuge mit einer übergreifenden Türkonstruktion verwenden zu können, gehen von den Seitenbereichen (16) und (18) des Tragelementes (10) Halterungen (20) und (22) aus, die mit den seitlichen Rändern des Kraftfahrzeugdaches (12) wie nachstehend geschildert wechselwirken.

Bei der übergreifenden Türkonstruktion weisen die Kraftfahrzeugdächer (12) seitlich abragende Stege (24) und (26) auf, die ihrerseits Dichtleisten (28) und (30) aufnehmen, gegen die die Türen dichtend anliegen. In der Fig. 1 ist dabei nur der obere Abschnitt der jeweiligen Tür (32) bzw. (34) dargestellt. Wie erkennbar ist, ergibt sich zwischen dem äußeren Rand des Steges (24) bzw. (26) und der zugeordneten Innenseite der Tür (32) bzw. (34) ein Abstand, der auch als Türspaltmaß bezeichnet wird, um so Relativbewegungen zwischen den Türen (32) und (34) und dem Kraftfahrzeugdach (12) bzw. dessen äußeren Rändern (24) und (26) zu ermöglichen. Der Ausgleich des Abstandes wird dabei über die Dichtleisten (28) und (30) vorgenommen.

Die erfindungsgemäßen Halterungen (20) und (22) verlaufen nun zwischen dem Kraftfahrzeugdach (12) und den Dichtleisten (28) und (30), wodurch eine merkliche Verformung dieser unterbleibt. Gleichzeitig wirken die äußeren Enden der Halterung (20) und (22) mit den nach außen ragenden Stegen (24) und (26) des Kraftfahrzeugdaches (12) zusammen. Schließlich erfolgt ein kraftschlüssiges Wechselwirken der Halterungen (20) und (22) in den Bereichen (36) und (38) des Kraftfahrzeugdaches (12), die im Bereich der Dichtleisten (28) und (30) liegen. Es erfolgt zumindest ein kraftschlüssiges Festlegen im in etwa vertikal verlaufenden Bereich des Dachs (12) oberhalb der Stege (24) und (26), so daß beim Spannen eines zwischen den Halterungen (20) und (22) verlaufenden Spannelements (40) das Dach zwischen den in den Bereichen (36) und (38) anliegenden Abschnitten der Halterungen (20) und (22) quasi wie in einem "Schraubstock" festgelegt wird, wodurch eine sichere Befestigung des Tragelementes gewährleistet ist. Hierdurch erfolgt ein sicheres Befestigen des Tragelementes (10), ohne daß z.B. die Halterung (20) und (22) mit dem Kraftfahrzeugdach (12) vernietet oder verschraubt werden müssen. Auch ist es nicht erforderlich, daß die Halterungen (20, 22) die Dichtleisten (28) und (30) von außen her umfassen, wodurch diese beschädigt werden würden. Ein Verformen der Stege (24) und (26) erfolgt auch nicht, da die diese umfassenden Endabschnitte der Halterungen (20) und (22) in diesen im wesentlichen umgeführt werden, ohne daß eine wesentliche Kraftübertragung erfolgt, die erwähntermaßen in dem Bereich (36) und (38) des Dachs (12) vorgenommen wird.

In dem Bereich (36) bzw. (38) des Kraftschluß können ferner nicht näher gekennzeichnete Antirutschhaftflächen entweder an der Halterung (20), (22) oder in den Bereichen (36) und (38) des Kraftfahrzeugdaches (12) vorgesehen, um so den Kraftschluß zu erhöhen.

Wie durch die Pfeile (42), (44) bzw. (46), (48) angedeutet werden soll, erfolgt ferner im Bereich der stabilen Zonen des Kraftfahrzeugdaches (12) eine Umlenkung der Kraft von einer in Richtung der Halterung (20) und (22) verlaufenden Kraftkomponente in eine in Richtung des Spannelementes (40), wobei letztere begrenzt wird, um beim Spannen des Spannelementes (40) zu gewährleisten, daß ein unerwünschtes Verformen des Kraftfahrzeugdaches (12) unterbleibt. Dabei kann ein Abschnitt der Halterungen (20) und (22) entlang des Daches verlaufen und sich auf dessen stabilen Zonen abstützen. Hierdurch ergibt sich auch der Vorteil, daß bei relativ kurzen Tragelementen eine Krafteinleitung von diesen über die auf dem Kraftfahrzeugdach sich abstützenden Abschnitt in die stabilen Zonen erfolgt.

In Fig. 2 ist eine erfindungsgemäße Halterung (50) und (52) dargestellt, die dem Aufbau und von der Funktionsweise her der der Fig. 1 entspricht. Die Halterungen (50) und (52) sind für ein Bügeltragelement (54) herkömmlicher Konstruktion bestimmt.

Auch im Ausführungsbeispiel der Fig. 2 erfolgt ein kraftschlüssiges Wechselwirken der Halterung (50) und (52) mit vertikal oder in etwa vertikal verlaufenden Bereichen (56) und (58) eines Kraftfahrzeugdaches (60), die in den Bereichen der Türen (62) und (64) und im Bereich von Dichtleisten (66) und (68) verlaufen. Auch kann in diesem Fall durch eine Antirutschhaftfläche der Kraftschluß erhöht werden, wobei jene entweder an der dem Kraftfahrzeugdach (60) zugewandten Fläche oder an der Außenfläche des Kraftfahrzeugdaches (60) in den Bereichen (58) bzw. (56) vorgesehen ist. Ferner erfolgt durch ein Spannelement, wie z.B. eine Stange (70) oder ein Seil (72) eine Kraftumlenkung von einer in etwa als vertikal zu bezeichnenden Komponente (74) bzw. (76) in eine hoirzontale Komponente (78) bzw. (80). Ebenfalls erfolgt eine Kraftbegrenzung in Richtung des Spannelementes (70) bzw. (72), um ein unkontroliertes Verformen des Kraftfahrzeugdaches (60) zu unterbinden.

Wie an Hand der Halterung (52) ferner erkennbar wird, kann diese von einer auf dem Kraftfahrzeugdach (60) abgestützen Verstrebung (82) ausgehen, wobei der mit dem Bereich (58) bzw. den nach außen ragenden nicht näher bezeichneten Stegen wechselwirkende Abschnitt der Halterung (52) um eine Achse (84) drehbar ist, um so ein und das selbe Tragelement (54) für Kraftfahrzeuge unterschiedlicher Größen verwenden zu können. Dabei können die entsprechenden Abschnitte der Halterung (52) auch längenverstellbar ausgebildet sein, um so auf Kraftfahrzeugdächer abgestimmt zu werden, bei denen die Abstände zwischen den nach außen ragenden Stegen und der Abstützfläche der Verstrebung (82) unterschiedlich sind.

In der Fig. 3 ist eine erfindungsgemäße Halterung (84) für eine Dachkonstruktion dargestellt, die im Abstand zum freien Rand (86) eine in Längsrichtung des Kraftfahrzeuges verlaufende Einbuchtung (88) aufweist. Dabei kann dieser Abschnitt ein Teil des Kraftfahrzeugdaches selbst oder ein an diesem befestigtes z.B. aus Kunststoff bestehendes Rinnenelement (90) sein.

Die erfindungsgemäße Halterung (84) besteht aus einem äußeren Abschnitt (92) und einem inneren Abschnitt (94), der in ein nicht dargestelltes Spannelement wie z.B. Seil oder eine längenveränderliche Stange übergeht oder ein Teil von diesen ist. Dabei ist die Halterung (84) um eine Achse (96) schwenkbar, die gleichzeitig die Unterteilung in den inneren und äußeren Teil (94) bzw. (92) vornimmt. Das äußere Teil (92) der Halterung (84) umgreift nun das freie Ende (86) des Rinnenelementes (60) und stützt sich z.B. durch einen Vorsprung (98) in der Einbuchtung (88) ab. Erfolgt nun eine Krafteinwirkung auf den inneren Teil (94) von dem Kraftfahrzeugdach, also von dem Rinnenelement (90) weg, so erfolgt ein Festspannen des äußeren Teils (92) zwischen dem freien Rand (86) und der Einbuchtung (88) aufgrund der durch den Vorsprung (98) hervorgerufenen Hebelwirkung, so daß ein so festgelegtes Tragelement unverrutschbar auf dem Kraftfahrzeugdach festgelegt ist. Dabei kann bei der Halterung (84) der Schwenkpunkt (96) innerhalb des Basiselementes der Trägeranordnung gemäß der Europäischen Patentanmeldung 0065218 liegen, so daß sowohl eine Diebstahlsicherung als auch ein Schutz gegen ein unerwünschtes Verschmutzen gegeben ist.

Der Drehpunkt (96) kann dabei durch eine Abstützung der Halterung (84) an einer im Inneren des Tragelement verlaufenden Halterung bzw. Führung für das Spannelement gebildet werden. Auch ist es nicht erforderlich, daß die Abschnitte (92) und (94) die wiedergegebene Form aufweisen. Wesentlich ist vielmehr, daß beim Spannen des Spannelementes die Halterung (84) mit dem Bereich (92) auf das Dach (90) gedrückt wird, da das Tragelement selbst bei Verkürzung des Spannelementes an das Dach herangezogen wird und somit der Abschnitt (92) von dem Tragelement erfaßt ist.

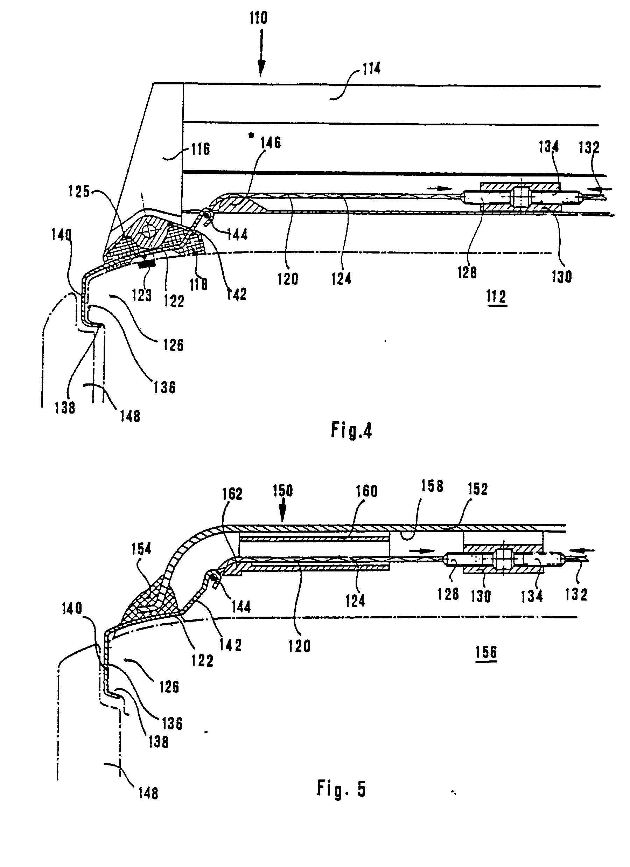

Den Fig. 4 bis 6 sind besonders hervorzuhebende Ausgestaltungen der Erfindung zu entnehmen.

In Fig. 4 ist im Ausschnitt ein Tragelement (110) in Form eines Tragbügels dargestellt, der Teil einer Trägeranordnung bildet, die auf einem Kraftfahrzeugdach (112) eines Kraftfahrzeuges angeordnet werden soll. Der Tragbügel (110) umfaßt dabei horizontal verlaufende Holme (114) und vertikal verlaufende Schenkel (116), die in Form von Abstützungen über vorzugsweise Gummielemente (118) auf dem Kraftfahrzeugdach (112) abgestützt werden. Um den Tragbügel (110) sicher auf dem Kraftfahrzeugdach anzuordnen ist eine Halterung (120) vorgesehen, die sich aus einem äußeren eigensteifen Abschnitt (122) und einem inneren vorzugsweise flexibel ausgebildeten Abschnitt (124) in Form eines Gurt oder Seils zusammensetzt. Diese Elemente sind zu beiden Seiten des Kraftfahrzeugdaches im Bereich der Längsholme (126) angeordnet. Zur Vereinfachung ist jedoch nur ein Teil des Kraftfahrzeugdaches dargestellt. Der innere flexible Abschnitt der Halterung (112) geht in einen Bolzen (128) über, der von einer Gegengewindehülse (130) aufgenommen wird, die zusammen als Spannschloß wirken. Der zur anderen Seite führende Abschnitt (132) der Halterung (120) geht ebenfalls in einen Bolzen (34) über, der verschiebbar in der z.B. Gegengewindehülse (130) angeordnet ist. Mit Hilfe eines Spannelementes kann nun z.B. die Gegengewindehülse gedreht werden, um die Bolzen (128) und (134) nach außen oder nach innen zu bewegen, je nachdem ob die Halterung (120) festgezogen oder gelöst werden soll.

Erfindungsgemäß wirkt der äußere eigenstabile z.B. aus einem Metallstreifen bestehende Abschnitt (122) kraftschlüssig mit dem Kraftfahrzeugdach (112) im Bereich des Seitenholmen (126) zusammen, wobei insbesondere ein festes Anliegen an dem vertikal verlaufenden Abschnitt (136) und abschnittsweise an dem unteren zum Inneren des Kraftfahrzeuges hin gerichteten Abschnitt (138) erfolgt. Der außenliegende freie Endabschnitt (140) des Abschnitts (122) der Halterung (120) ist demzufolge in dem Ausführungsbeispiel in etwa L-förmig ausgebildet, um so ein sicheres Erfassen der durch die Fläche (136) und (138) gebildeten Kante zu ermöglichen. Die L-Form ist selbstverständlich nicht zwingend, kann auch bogenförmig, gewölbt oder ähnlich ausgebildet sein. Sofern entlang der Fläche (136) ein Steg entsprechend z.B. der Fig. 1 abragt, wird dieser normalerweise von dem Abschnitt (140) umfaßt.

Der Abschnitt (122) verläuft ferner unterhalb der Abstützung (116) entlang des Kraftfahrzeugdaches (112), um sodann vom Kraftfahrzeugdach (112) weg abgewinkelt zu werden. Dieser Abschnitt ist mit dem Bezugszeichen (142) versehen. Dieser Abschnitt ist mit dem Seil (124) verbunden (Bezugszeichen 144), um so beim scheinbaren Verkürzen mit Hilfe des Spannschloses ein sicheres Anliegen des Bügels (110) auf dem Kraftfahrzeugdach zu gewährleisten. Um hierdurch eine Umlenkung des Kraftflusses von einer Horizontalen in eine Diagonale zu ermöglichen, die durch den Abschnitt (142) der Halterung (120) vorgegeben ist, ist das Seil (124) im Bereich des Befestigungspunktes (144) abgestützt und erstreckt sich sodann in Richtung des freien Endes (142) des Abschnitts (122) der Halterung (120).

Durch diese Kraftumlenkung und das Führen des Abschnitts (122) unterhalb des Abschnitts (116) entlang des Kraftfahrzeugdaches (112) wird ersichtlich, daß beim Bewegen der Bolzen (128) und (134) in die Gewindehülse hinein das Spannelement (124) scheinbar verkürzt wird, so daß durch die Kraftumlenkung im Bereich der Abstützung (146) hervorgerufen, der Tragbügel (110) in Richtung des Kraftfahrzeugdaches (112) gezogen wird, wodurch wiederum der Abschnitt (122) der Halterung (120) und damit der außenliegende freie Endabschnitt (140) noch fester an dem Kraftfahrzeugdach (112) anliegt. Die Unterseite der Abstützung wirkt somit als Gegenlager für die Halterung. Dabei kann zwischen dem Abschnitt (122) insbesondere im Bereich der Flächen (138) und/oder (136) ein weiteres Haftmittel vorgesehen werden, um so die Reibung zu erhöhen, durch die eine nahezu völlige Unverrückbarkeit des Tragbügels (110) gewährleistet ist. Nach einer weiteren besonders zu erwähnenden Ausgestaltung kann der Abschnitt (122) zusätzlich im Bereich z.B. einer Schweißnaht (123), wo das Kraftfahrzeugdach besonders stabil ausgebildet ist, abgestützt sein. Hierzu kann der Abschnitt (122) mit einem Vorsprung (125) oder ähnlichem versehen sein.

Wie das Ausführungsbeispiel der Fig. 4—wie auch das der Fig. 5—zeigt, ist die Trägeranordnung im Bereich einer Kraftfahrzeugöffnung, und zwar im Bereich einer Tür (148) angeordnet. Da in diesem Bereich zwischen der Tür und der Fläche (136) des Seitenholmens (126) eine Dichtleiste verläuft, erstreckt sich die erfindungsgemäße Halterung, als der freie Endabschnitt (140) vorzugsweise zwischen der nicht dargestellten Dichtleiste und dem Längsholmen (126), so daß hierdurch gewährleistet ist, daß weder Flüssigkeit in das Kraftfahrzeuginneren fließen noch eine unerwünschte Geräuschbildung auftritt, die bei Beschädigung der Dichtleiste festzustellen wäre.

In Fig. 5 ist am Ausschnitt ein Tragelement (150) dargestellt, das im Prinzip nach der Europäischen Patentanmeldung 0065218 ausgebildet ist, so daß insoweit auf die diesbezügliche Offenbarung verwiesen wird. Bei diesem Tragelement (150) handelt es sich um ein schalenförmiges Basiselement (152), das über zumindest ein im Seiten- und im Vorderbereich verlaufende Dichtelement (154) auf dem Kraftfahrzeugdach (156) abgestützt ist. Um das Tragelement (150) sicher auf dem Kraftfahrzeugdach (156) anzuordnen, ist eine Halterung vorgesehen, die der der Fig. 4 entspricht. Daher sind gleiche Elemente mit gleichen Bezugszeichen versehen. Folglich wird das Tragelement (150), also das Basiselement (152) durch das Entlanglaufen des eigensteifen Abschnitts (122) der Halterung (120) entlang der Flächen (136) und (138) des Längsholmens (126) kraftschlüssig mit den Seitenrändern des Kraftfahrzeugdaches verbunden, um anschließend unterhalb des Gummielementes (154) zu verlaufen und derart umgelenkt zu werden, daß beim scheinbaren Verkürzen der Seilabschnitte (124) und (132) das Basiselement (152) bestrebt ist, noch näher zum Kraftfahrzeugdach (156) hingezogen zu werden.

An der Prinzipdarstellung der Fig. 5 erkennt man auch, daß das Seilelement (124) in einer von der Innenfläche (158) des Basiselementes (152) ausgehenden Führung (160) aufgenommen wird, wobei die Umlenkung im Bereich der linken Außenkante (162) erfolgt, die zur Schonung des Seils (124) abgerundet ist.

Alternativ besteht die Möglichkeit, den Abschnitt (122) der Halterung (120) durch die Seitenwandung des Basiselementes (152) von oben in Richtung des Daches (156) auf die Halterung abgestützt ist und der Anlenkpunkt (144) zwischen dem Abschnitt (122) imd dem Spannelement (124) oberhalb des so gebildeten Durchsetzungsschlitzes liegt.

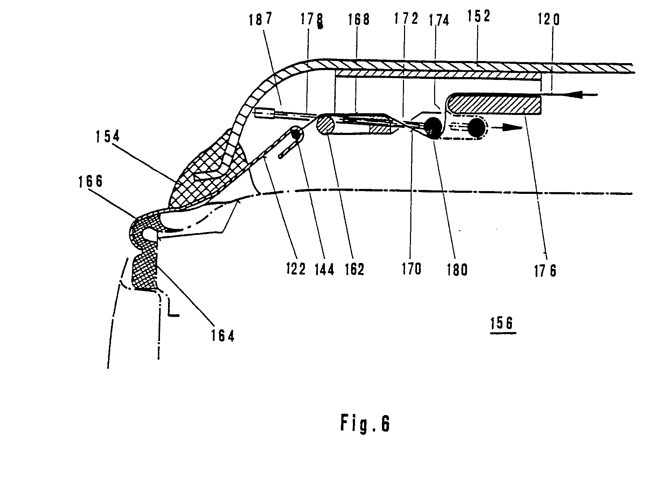

Der Fig. 6 ist eine besonders hervorzuhebende Ausgestaltung einer Spannanordnung zu entnehmen, durch die das Spannschloß ersetzt werden soll, das im Zusammenhang mit den Fig. 4 und 5 erläutert worden ist. Dabei wird die Spannanordnung an Hand des Tragelementes (150) verdeutlicht, wie es in Fig. 5 beschrieben worden ist, so daß gleiche Elemente mit gleichen Bezugszeichen versehen sind. Abweichend von der Ausführungsform nach Fig. 5 umfaßt jedoch der eigensteife Abschnitt (122) nicht einen im Schnitt L-förmig ausgebildeten Dachrandabschnitt, sondern vielmehr einen bogenförmigen Vorsprung (164). Entsprechend ist das freie äußere Ende (166) des Abschnitts (122) ausgebildet, um so eine form- und kraftschlüssige Verbindung zu dem Bereich (164) zu ermöglichen.

Um das Tragelement (150) fest auf dem Kraftfahrzeugdach (156) anzuordnen, geht der eigensteife Abschnitt (122) über den Verbindungspunkt (144) in einen beweglichen Abschnitt (168) über, der innerhalb des Tragelementes (150) verläuft und im Bereich der Kante (162) umlenkbar ist. Der Abschnitt (168) geht sodann in ein Spannelement (170) vorzugsweise in Form eines Gurtbandes (117) über, das durch Ausnehmungen (172) und (174) einer Befestigungsplatte oder eines Streifens (176) geführt ist. Hierdurch wird eine Schlaufe (178) gebildet, die durch ein Stellelement (180) vergrößert oder verkleinert werden kann. Hierdurch wird die wirksame Länge der Halterung (120) verändert, ohne daß Gegengewindehülse, Bolzen oder ähnliches erforderlich sind, wie es an Hand der Fig. 4 und 5 geschildert worden ist. Das Stellelement (118) kann über ein Gestänge (182) entlang der Platte (176) verschoben werden, so daß je nach Stellung des Elementes (180) eine kleine oder große Schlaufe (178) gebildet ist. Befindet sich demzufolge des Stellelement (180) rechts von der Aussparung (174), so ist die Schlaufe (180) groß und die wirksame Länge der Halterung (120) klein. Ungekehrt wird die wirksame Länge der Halterung (120) vergrößert, wenn das Stellelement (180) in Richtung der Aussparung (172), also nach links verschoben wird.

Das Gestänge (182) kann z.B. über einen nicht dargestellten in dem Tragelement (150) eingelassenen Schlitz gedreht werden, um so ein Verschieben des Stellelementes (180) zu erzielen, indem das Gestänge (182) mit einem Außengewinde versehen ist, das mit einem fest z.B. an der Platte (176) angeordneten Gegengewinde wechselwirkt.

**Patentansprüche**

1. Halterung (84, 120) für eine auf ein Kraftfahrzeugdach (90, 112, 156) anzuordnende Trägeranordnung ohne Vornahme von konstruktiven Änderung am Kraftfahrzeugdach, wobei die Trägeranordnung zumindest ein zur Kraftfahrzeuglängsrichtung angeordnetes Tragelement (84, 110, 150) umfaßt und die Halterung mit einem Abschnitt des eine Dichtleiste (66, 68, 104) aufweisenden vorzugsweise mit einem abragenden Steg versehenen Dachrandes im Bereich einer mit einem Verschlußelement wie Tür (148) abdeckbaren Kraftfahrzeugöffnung oder mit einer Dachregenrinne wechselwirkt, wobei die Halterung den Dachrand (86) umfaßt und schraublos kraftschlüssig mit den stabilen Zonen des Kraftfahrzeugdaches im Bereich der Kraftfahrzeugöffnung wechselwirkt und jeweils durch eine im Abstand zu dem Kraftfahrzeugdach verlaufende Achse (96, 144) in einen inneren (94, 124) und einen äußeren (92, 142) Abschnitt unterteilt ist, dadurch gekennzeichnet, daß die inneren und äußeren Abschnitte (94, 124; 92, 142) um die Achsen (96, 144) verschwenkbar sind und daß zumindest die in ihren von den Achsen (96, 144) ausgehenden Endabschnitten flexibel ausgebildeten inneren Abschnitte (94, 124) im Bereich der Achsen derart abgestützt und umgelenkt sind, daß über die inneren Abschnitte eine Umlenkung des Kraftschlusses von einer Horizontalen in Richtung des Kraftfahrzeugdaches (112, 156) erfolgt.

2. Halterung (120) für eine Trägeranordnung nach Anspruch 1, wobei die Tragelemente (110, 150) der Trägeranordnung von auf den Seitenbereichen (126) des Kraftfahrzeugdaches aufliegenden Abstützungen (116, 154) ausgehen, dadurch gekennzeichnet, daß die äußeren Abschnitte (142) unter den oder durch die Abstützungen (116, 118, 154) verlaufen und eigensteif ausgebildet sind, wobei die freien einander zugewandten Enden (142) der äußeren Abschnitte vom Kraftfahrzeugdach (112, 156) weg abgewinkelt sind und vorzugsweise in der Achse (144) in die als Spannelement (124, 128, 130, 132, 134) ausgebildeten inneren Abschnitte übergehen.

3. Halterung nach Anspruch 2, dadurch gekennzeichnet, daß das Spannelement von den eigensteifen Abschnitten (122) ausgehenden Seilabschnitte (124) umfaßt, die zur Einstellung ihrer wirksamen Länge durch ein Spannschloß (128, 130, 134) verbunden sind.

4. Halterung nach Anspruch 2, dadurch gekennzeichnet, daß eine Kraftbegrenzung entlang des Spannelementes (124, 128, 130, 132, 134) vorgesehen ist.

5. Halterung vorzugsweise nach Anspruch 1, dadurch gekennzeichnet, daß zur Einstellung der wirksamen Länge der Halterung (120) ein die äußeren Abschnitte (122) verbindendes flexibel ausgebildetes Element (78) eine einstellbare Schlaufe (178) aufweist, die zu dessen Größeneinstellung mit einem Stellelement (180) wechselwirkt.

6. Halterung nach zumindest Anspruch 2, dadurch gekennzeichnet, daß der Abschnitt (122) vorzugsweise im Bereich der Abstützungen (116, 154) über z.B. einen Vorsprung (125) auf dem Kraftfahrzeugdach abgestützt ist.

7. Halterung nach Anspruch 6, dadurch gekennzeichnet, daß der Vorsprung (125) auf einer im Kraftfahrzeugdach verlaufenden Schweißnaht (123) abgestützt ist.

8. Halterung (84) für eine auf ein Kraftfahrzeugdach (90) anzuordnende Trägeranordnung ohne Vornahme von konstruktiven Änderungen am Kraftfahrzeugdach, wobei die Trägeranordnung zumindest ein zur Kraftfahrzeuglängsrichtung angeordnetes Tragelement (84, 110) umfaßt und die Halterung mit einem Abschnitt des eine Dichtleiste aufweisenden vorzugsweise mit einem abragenden Steg versehenen Dachrandes im Bereich einer mit einem Verschlußelement wie Tür abdeckbaren Kraftfahrzeugöffnung oder mit einer Dachregenrinne wechselwirkt, wobei die Halterung den Dachrand (86) umfaßt und schraublos kraftschlüssig mit den stabilen Zonen des Kraftfahrzeugdaches im Bereich der Kraftfahrzeugöffnung wechselwirkt und jeweils durch eine im Abstand zu dem Kraftfahrzeugdach verlaufende Achse (96) verschwenkbar und durch diese in einen inneren (94) und einen äußeren (92) Abschnitt unterteilt ist und wobei im Abstand zum seitlichen Dachrand (86) ein in Längsrichtung des Kraftfahrzeuges verlaufender Bereich (88) wie Einbuchtung vorgesehen ist, dadurch gekennzeichnet, daß der den Dachrand (86) zumindest teilweise umgreifende äußere Abschnitt (92) auf dem Bereich (88) abgestützt ist und der innere Abschnitt mit einem entlang des Kraftfahrzeugdaches verlaufenden Spannelement verbunden oder ein Abschnitt von diesem ist.

**Revendications**

1. Attache (84, 120) destinée à un support à disposer sur un toit de véhicule à moteur (90, 112, 156) sans qu'il soit nécessaire de procéder à des modifications constructives du toit du véhicule, le support comprenant au minimum un élément porteur (84, 110, 150) disposé dans le sens longitudinal du véhicule et l'attache fonctionnant en interaction avec une section de la bordure du toit présentant une baguette d'étanchéité (66, 68, 104) et dotée de préférence d'une traverse en saillie dans la zone d'une ouverture du véhicule recouvrable à l'aide d'un élément de fermeture—porte par exemple (148)—, ou avec une gouttière de toit, l'attache enserrant la bordure du toit (86) et fonctionnant en interaction, sans vis et par adhérence, avec les zones stables du toit du véhicule, dans la partie de l'ouverture du véhicule, et étant subdivisée, chaque fois par un axe (96, 144) suivant un tracé distant du toit du véhicule, en une section intérieure (94, 124) et une section extérieure (92, 142), caractérisée en ce que les sections intérieures et extérieures (94, 124; 92, 142) peuvent pivoter autour des axes (96, 144) et que, au moins les sections intérieures (94, 124), conçues de façon flexible dans leurs sections finales partant des axes (96, 144), s'appuient et sont déviées, dans la zone des axes, de telle manière que, via les sections intérieures, une déviation de l'adhérence d'une horizontale se produit en direction du toit du véhicule (112, 156).

2. Attache (120) pour un support, suivant la revendication n° 1, les éléments porteurs (110, 150) du support partent des appuis (116, 154) reposant sur les parties latérales (126) du toit du véhicule, caractérisée en ce que les sections extérieures (142) passent sous ou à travers les appuis (116, 118, 154) et sont auto-rigides, les extrémités libres opposées (12) des sections extérieures du toit du véhicule (112, 156) sont coudées et s'engagent, de préférence dans l'axe (144), dans les sections intérieures formant un élément de serrage (124, 128, 130, 132, 134).

3. Attache suivant la revendication n° 2 caractérisée en ce que l'élément de serrage enserre des sections de câble (124) partant des sections auto-rigides (122), lesquelles sont reliées par un tendeur (128, 130, 134) pour le réglage de leur longueur active.

4. Attache suivant la revendication n° 2 caractérisée en ce qu'une limitation de force est prévue le long de l'élément de serrage (124, 128, 130, 132, 134).

5. Attache de préférence suivant la revendication n° 1 caractérisée en ce que, pour le réglage de la longueur active de l'attache (120), un élément (78), reliant les sections extérieures (122) et conçu de façon flexible, présente une boucle réglable (178) qui fonctionne en interaction avec un élément d'ajustage (180) pour le réglage de sa grandeur.

6. Attache suivant au moins la revendication n° 2, caractérisée en ce que, la section (122) s'appuie de préférence dans la zone des appuis (116, 154), via une saillie p. ex. (125), sur le toit du véhicule.

7. Attache suivant la revendication n° 6, caractérisée en ce que la saillie (125) s'appuie sur une soudure (123) du toit du véhicule.

8. Attache (84) destinée à un support à disposer sur un toit de véhicule à moteur (90) sans qu'il soit nécessaire de procéder à des modifications constructives du toit du véhicule, le support comprenant au minimum un élément porteur (84, 110) disposé dans le sens longitudinal du véhicule et l'attache fonctionnant en interaction avec une section de la bordure du toit présentant une baguette d'étanchéité (66, 68, 104) et dotée de préférence d'une traverse en saillie dans la zone d'une ouverture du véhicule recouvrable à l'aide d'un élément de fermeture—porte par exemple—, ou avec une gouttière de toit, l'attache enserrant la bordure du toit (86) et functionnant en interaction, sans vis et par adhérence, avec les zones stables du toit du véhicule, dans la partie de l'ouverture du véhicule, et pouvant pivoter chaque fois à l'aide d'un axe (96) suivant un tracé distant du toit du véhicule et étant divisée par celui-ci en une section intérieure (94) et une section extérieure (92), et une partie (88)—échancrure par exemple—, distante de la bordure latérale du toit (86) et suivant un tracé allant dans le sens longitudinal du véhicule, étant prévue, caractérisée en ce que la section extérieure (92) enserrant, au moins en partie, la bordure du toit (86) s'appuie sur la partie (88) et que la section intérieure est reliée avec un élément de serrage allant le long du toit du véhicule ou forme un section de celui-ci.

**Claims**

1. A holding device (84, 120) for a rack arrangement to fit on a vehicle roof (90, 112, 156) without making design changes to said vehicle roof, where said rack arrangement comprises at least one support element (84, 110, 150) arranged longitudinal to the vehicle, and where said holding device interacts with a section of the roof edge having a sealing strip (66, 68, 104) and being preferably provided with a projecting bar in the area of a vehicle opening coverable by a closing element such as a door (148), or with a roof gutterm where said holding device encloses the roof edge (86) and interacts without screws and in non-positive manner with the stable zones of said vehicle roof in the area of said vehicle opening and is divided on each side into an inner (94, 124) and an outer (92, 142) section by an axis (96, 146) arranged at a distance from said vehicle roof, characterized in that said inner and outer sections (94, 124; 92, 142) are swivellable about the axes (96, 144) and in that at least said flexibly designed inner sections (94, 124) are supported and deflected in their end sections extending from said axes (96, 144) in such a way that the non-positive force is deflected from a horizontal to the direction of said vehicle roof (112, 156) by said inner sections.

2. A holding device for a rack arrangement according to Claim 1, where the support elements (110, 150) of said rack arrangement extend from supports (116, 154) resting on the lateral areas (126) of the vehicle roof, characterized in that the outer sections (142) pass underneath or through said supports (116, 118, 154) and are designed inherently rigid, where the free ends (142) facing one another of said outer sections are angled away from said vehicle roof (112, 156) and merge preferably in the axis (144) into the inner sections designed as a clamping element (124, 128, 130, 132, 134).

3. A holding device according to Claim 2, characterized in that the clamping element comprises cable sections (124) extending from the inherently rigid sections (122) and connected by a turnbuckle (128, 130, 134) for adjustment of their effective length.

4. A holding device according to Claim 2, characterized in that force limitation is ensured along the clamping element (124, 128, 130, 132, 134).

5. A holding device preferably according to Claim 1, characterized in that to set the effective length of said holding device (120), a flexibly designed element (78) connecting the outer sections (122) has an adjustable loop (178) interacting with a setting element (180) for adjusting the size of said element (78).

6. A holding device according to Claim 2 at least, characterized in that the section (122) is supported preferably in the vicinity of the supports (116, 154), for example by a projection (125) on the vehicle roof.

7. A holding device according to Claim 6, characterized in that the projection (125) is supported on a weld (123) in the vehicle roof.

8. A holding device (84) for a rack arrangement to fit on a vehicle roof (90) without making design changes to said vehicle roof, where said rack arrangement comprises at least one support element (84, 110) arranged longitudinal to the vehicle, and where said holding device interacts with a section of the roof edge having a sealing strip and being preferably provided with a projecting bar in the area of a vehicle opening coverable by a closing element such as a door, or with a roof gutter, where said holding device encloses the roof edge (86) and interacts without screws and in a non-positive manner with the stable zones of said vehicle roof in the area of said vehicle opening and is swivellable by an axis (96) arranged at a distance from said vehicle roof on each side and is divided by said axis into an inner (94) and an outer (92) section, and where an area (88) such as a depression is provided longitudinal to the vehicle at a distance from said lateral roof edge, characterized in that said outer section (92) enclosing at least partially said roof edge (86) is supported on said area (88) and in that said inner section is connected to a clamping element arranged along the vehicle roof or forms a section of said element.

FIG.1

FIG.2

FIG.3

Fig.4

Fig. 5

Fig. 6